# EUROPEAN PATENT APPLICATION

(11) **EP 1 482 432 A2**
(43) Date of publication of application: **01.12.2004**
(21) Application number: 04291337.6
(22) Date of filing: 27.05.2004
(51) Int. Cl.: G06F 17/30

(54) **System and method of modelling of a multi-dimensional data source in an entity-relationship model**

(30) Priority: 27.05.2003 CA 2429907
(71) Applicant: Cognos Incorporated, Ottawa, Ontario K1G 4k9 (CA)
(72) Inventor: Potter, Charles Mike, Nepean, Ontario K2G 6H4 (CA)
(74) Representative: Geismar, Thierry

(57) **Abstract**

An entiry-relationship modelling system for modelling a multi-dimensional data source in an entity-relationship model is provided. The entity-relationship system comprises an import module for performing translations on multi-dimensional data, a translation module for translating multi-dimensional data into an entity-relationship schema, and a repository for storing the entity-relationship schema.

## Description

### FIELD OF THE INVENTION

The invention relates to a system and method of modelling of a multi-dimensional data source in an entity-relationship model.

### BACKGROUND OF THE INVENTION

Business data is increasingly being stored in data warehouses, either in relational database systems, typically for the generation of business reports, or in proprietary multi-dimensional data stores, typically for the purpose of performing analysis and exploration.

The entity-relationship (E/R) model was introduced to facilitate the modeling of metadata in relational database management systems (RDBMS). The E/R model describes a set of logical entities and their relationships to one another and has been used extensively in the design of transaction processing (TP) systems implemented using RDBMS technology. These TP systems generated a large volume of data that was identified as being a strategic corporate resource that could be used to monitor, analyze, and predict corporate performance.

The databases upon which the TP systems were built were not suited for the demands of reporting, analysis, and exploration. What was optimal for transaction processing was the opposite of what was required for reporting, analysis, and expiration.

Over time, the concept of dimensional modeling was introduced that facilitated the design of relational databases for the purpose of reporting, analysis, and exploration. The concepts of dimensions, facts, and properties are central to this model and introduced the additional concepts of star and snowflake schemas as the two main relational representations of dimensional data.

A star or snowflake schema can be represented using the E/R data model, although the concept of hierarchies is not easily captured in the E/R data model, if at all.

At the same time, several software vendors designed and released products that used proprietary technology to store data in a format optimized for analysis and exploration (eventually termed OLAP - online analytic processing). These technologies were, as a group, termed multi-dimensional OLAP, or MOLAP. These data stores, often referred to as cubes, were based on dimensions, hierarchies, measures, and properties.

Relational OLAP (ROLAP) technologies have been developed that provide the ability to query star or snowflake data RDBMS-based data warehouses in terms of OLAP-style query semantics as opposed to using SQL relational query syntax. As part of this capability, the star or snowflake schema is mapped into a corresponding dimensional or MOLAP representation to facilitate the construction of OLAP queries.

The problem with OLAP, or multi-dimensional metadata, is that though it is semantically "rich", it is not well suited as the basis for the creation of tabular or even cross-tabulated reports. Less sophisticated users do not understand multi-dimensional constructs and the more sophisticated "power" users usually have an understanding of the data that precludes the necessity of dimensional information. What is required is an E/R schema that can act as the basis for authoring reports.

### SUMMARY OF THE INVENTION

It is an object of the present invention to provide a mechanism for constructing an E/R schema from a multi-dimensional data source to facilitate the authoring of reports against these data sources.

In accordance with an embodiment of the present invention, there is provided an entity-relationship modelling system for modelling a multi-dimensional data source in an entity-relationship model. The entity-relationship system comprises an import module for performing translations on multi-dimensional data, a translation module for translating multi-dimensional data into an entity-relationship schema, and a repository for storing the entity-relationship schema.

In accordance with another embodiment of the present invention, there is provided a multi-dimensional model to entity-relationship schema translation system. The system comprises an input file comprising a description of a multi-dimensional data, a translation model for translating the multi-dimensional data into an entity-relationship schema, an output file comprising the entity-relationship schema, and a computer terminal for storing the entity-relationship schema.

In accordance with another embodiment of the present invention, there is provided a method of creating an entity-relationship schema from a multi-dimensional data source. The method comprises the steps of selecting multi-dimensional data, performing translations on the multi-dimensional data, and generating an internal entity-relationship schema based upon the translations.

In accordance with another embodiment of the present invention, there is provided a method of translating multi-dimension data into an entity-relationship schema. The method comprises the steps of producing a single entity in an entity-relationship schema for each hierarchy of each dimension in a multi-dimensional model, producing a single fact entity in the entity-relationship schema, and producing a single relationship between each hierarchical entity and the fact entity to represent a star schema in the entity-relationship schema.

In accordance with another embodiment of the present invention, there is provided a computer data signal embodied in a carrier wave and representing sequences of instructions which, when executed by a processor, cause the processor to perform a method of creating an entity-relationship schema from a multi-dimensional data source. The method comprises the steps of selecting multi-dimensional data, performing translations on the multi-dimensional data, and generating an internal entity-relationship schema based upon the translations.

In accordance with another embodiment of the present invention, there is provided a computer-readable medium having computer readable code embodied therein for use in the execution in a computer of a method of creating an entity-relationship schema from a multi-dimensional data source. The method comprises the steps of selecting multi-dimensional data, performing translations on the multi-dimensional data, and generating an internal entity-relationship schema based upon the translations.

In accordance with another embodiment of the present invention, there is provided a computer program product for use in the execution in a computer of an entity-relationship modelling system for modelling a multi-dimensional data source in an entity-relationship model. The computer program product comprises an import module for performing translations on multi-dimensional data, a translation module for translating multi-dimensional data into an entity-relationship schema, and a repository for storing the entity-relationship schema.

### BRIEF DESCRIPTION OF THE DRAWINGS

Figure 1 shows an example of a multi-dimensional model to entity relationship (E/R) translation system, in accordance with an embodiment of the present invention.
Figure 2 shows flowchart of an example of a method of modelling a multi-dimensional data source in an E/R model, in accordance with an embodiment of the multi-dimensional model to E/R translation system.
Figure 3 shows another example of a 2multi-dimensional model to E/R translation system, in accordance with an embodiment of the present invention.
Figure 4 shows another example of a multi-dimensional model to E/R translation system, in accordance with an embodiment of the present invention.
Figure 5 shows another example of a multi-dimensional model to E/R translation system, in accordance with an embodunent of the present invention.
Figure 6 shows another example of a multi-dimensional model to E/R translation system, in accordance with an embodiment of the present invention.
Figure 7 shows another example of a multi-dimensional model to E/R translation system, m accordance with an embodiment of the present invention.
Figure 8 shows in a process flow diagram an example of a translation module, in accordance with an embodiment of the present invention.
Figure 9 shows a flowchart of an example of an import process, in accordance with an embodiment of the invention.
Figure 10 shows an example of an Import Selection Dialog of a business modelling application.
Figure 11 shows in a flowchart a method of importing cube information, in accordance with an embodiment of the impon module.
Figure 12 shows an example of a representation of a dimension in a business modelling application.
Figure 13 shows an example of a Hierarchy, Level, and Attribute Metadata dialog in a business modelling application.
Figure 14 shows an example of an OLAP Import Options dialog in a business modelling application.
Figure 15 shows an example of a Fact Table dialog in a business modelling application.
Figure 16 shows a screen shot of an example of a star schema representation of an OLAP Cube in a business modelling application.
Figure 17 shows an example of a Dimension to Fact Join Relationship dialog in a business modelling application.
Figures 18 and 19 show examples of a first and second step in a Conformed Dialog Wizard in a business modelling application.

### DETAILED DESCRIPTION OF THE PREFERRED EMBODIMENTS

Relational online analytic processing (ROLAP) technologies have been developed that provide the ability to query star or snowflake data relational database management systems (RDMBS) based data warehouses in terms of online analytic processing (OLAP) style query semantics as opposed to using structured query language (SQL) relational query syntax. As part of this capability, the star or snowflake schema is mapped into a corresponding dimensional or multidimensional OLAP (MOLAP) representation to facilitate the construction of OLAP queries.

However, the converse has traditionally not been done - that is, mapping OLAP metadata into a dimensional, E/R representation for the purposes of producing business reports, typically comprised of tabular or grouped list reports. Now that corporations are capable of storing large volumes of business data into MOLAP data stores (greater than 1 billion rows of transaction data), MOLAP data stores are viewed as a strategic data store that should be utilized for reporting and not just analysis. As well, at least one large ERP vendor only provides access to its data warehouse via an OLAP query language, yet it is desirable to be able to perform reporting against these data stores.

A system and method that automatically creates entity-relationship (E/R) schemas, thus providing the basis for authoring tabular and cross-tabulated reports by a wide range of report authors, is described below. A methodology, described below, transforms the metadata of a multi-dimensional data source into an E/R model, facilitating the creation of business reports regardless of the manner in which data is stored. What follows is a description of how OLAP metadata is converted into an E/R metadata model, explicitly in terms of its implementation within a business modelling application.

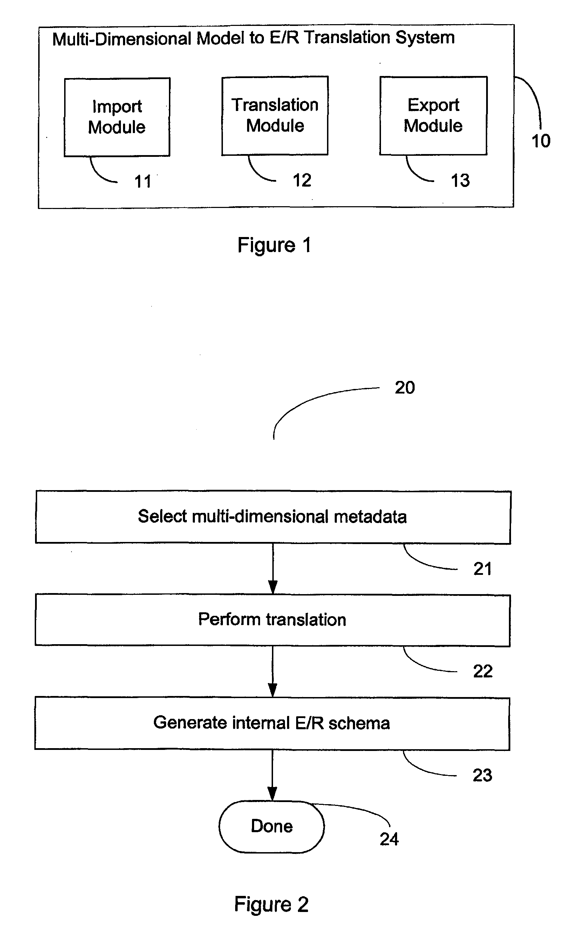

Figure 1 shows an example of a multi-dimensional model to E/R translation system 10, in accordance with an embodiment of the present invention. The multi-dimensional model to E/R translation system 10 comprises a multi-dimensional metadata import module 11 for receiving multidimensional (such as OLAP) metadata, a multi-dimensional model to E/R schema translation module 12 for mapping multidimensional metadata into an E/R schema, and a repository or export module 13 for storing the E/R schema produced as a result of the previous translation. The multi-dimensional model to E/R schema translation module 12 is further described below.

Figure 2 shows flowchart of an example of a method of modelling a multi-dimensional data source in an E/R model (20), in accordance with an embodiment of the multi-dimensional model to E/R translation system 10. The method (20) begins with selecting multi-dimensional metadata (21). Next, a translation is performed on the metadata (22). Based upon the translation (22), an internal E/R schema is generated (23). The method (20) is done (24). The translation (22) is further described below.

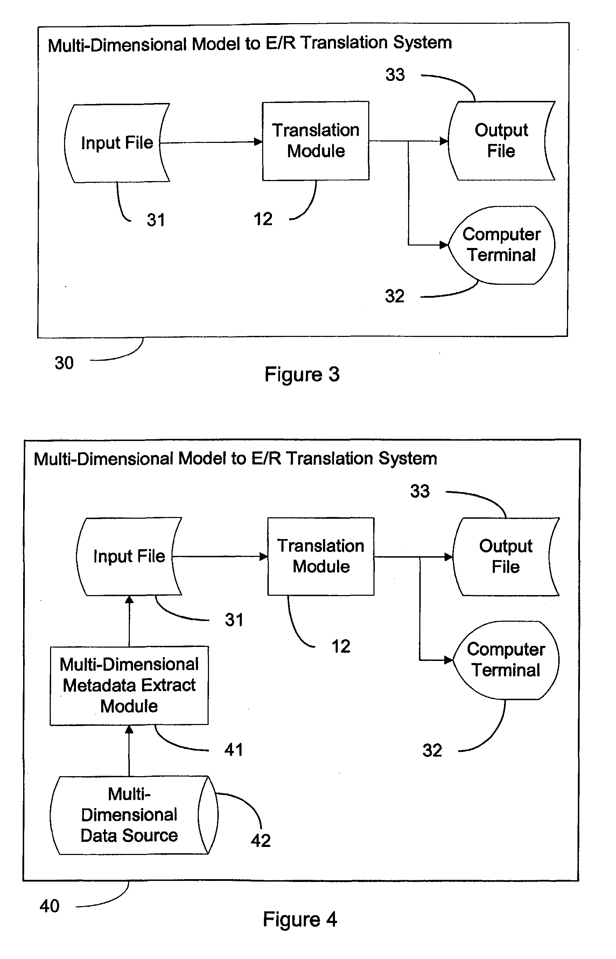

Figure 3 shows another example of a multi-dimensional model to E/R translation system 30, in accordance with an embodiment of the present invention. This system 30 is comprised of a translation module 12 obtaining input from a file 31 containing a description of the metadata of a multi-dimensional system defined in a format understood by the translation module 12 and producing output in the form of an output file 33 stored on a computer storage device, or sent to a computer terminal 32 such as a printer. Such a system 30 would perform translations based on default translation rules.

Figure 4 shows another example of a multi-dimensional model to E/R translation system 40, in accordance with an embodiment of the present invention. This system 40 is an extension of the system 30 with an introduction of a multi-dimensional model extract module 41 that is capable of producing the input files required by the translation module 12. Such a model extract component 41 is capable of producing the input files 41 for a single type of multi-dimensional data source 42. This system 40 shows an initial development of the metadata input.

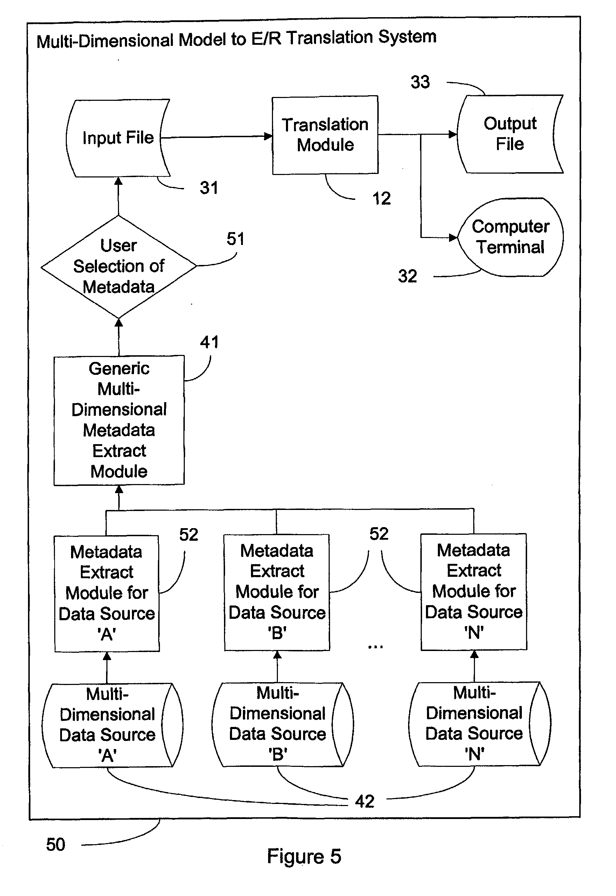

Figure 5 shows a further extension with the production of a multi-layered model extract component 52 that provides a common interface to components 52 that each provides access to the metadata of different types of multi-dimensional data source 42. A single internal component is then capable of accessing any one of these data sources 42 and producing a consistent input file 31 for the translation module 12, regardless of the originating multi-dimensional data source 42. A computer user interface 51 is a further extension to the extract component 52, allowing the user to define access to different multi-dimensional data sources 54 and then choosing which data sources 42 to include in an import translation file 31. Figure 5 shows further enhancement of the import module 11.

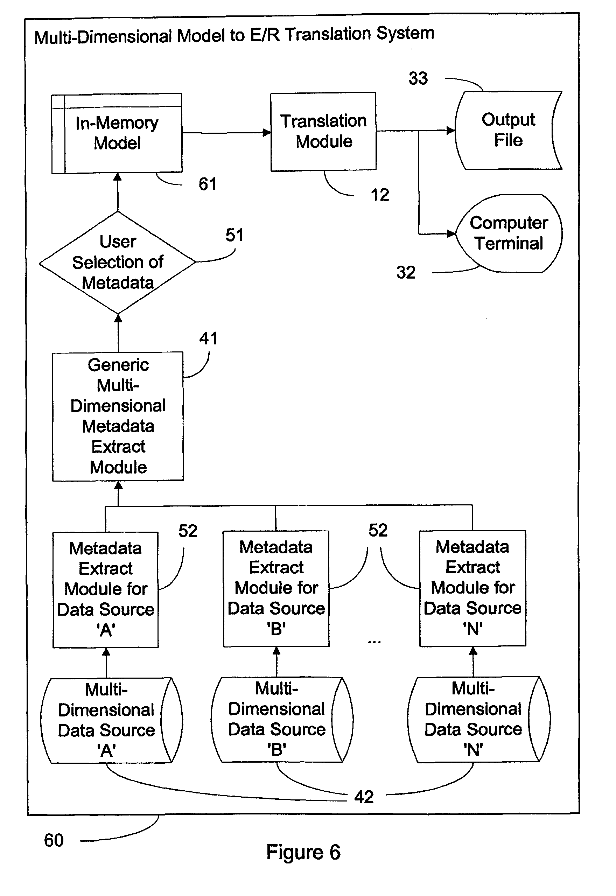

Figure 6 shows another example of a multi-dimensional model to E/R Translation system 60, in accordance with an embodiment of the present invention. Instead of using a file 31 as input to the translation module 12, the extract module 42 and the translation module 12 can be combined into a single program and exchange the multi-dimensional model via an in-memory representation 61 of the same information contained in the original extract file. Figure 6 shows further enhancement of the import module 11.

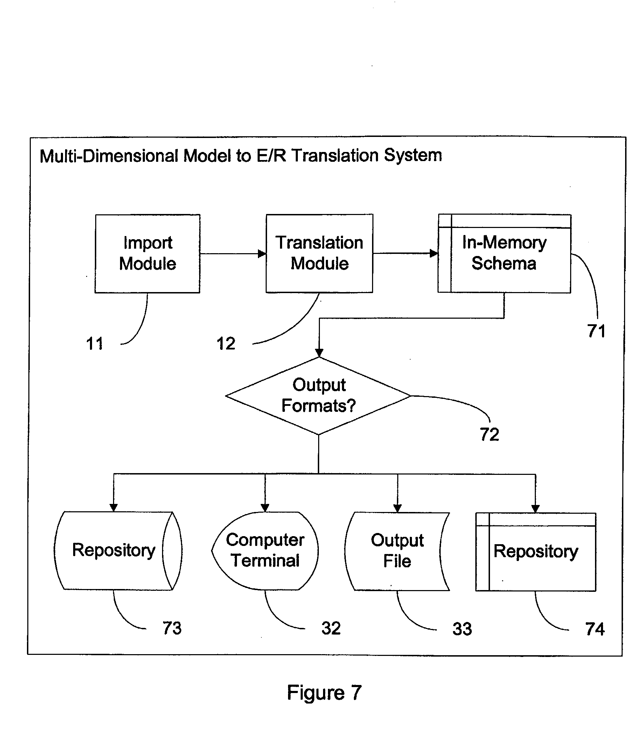

Figure 7 shows another example of a multi-dimensional model to E/R translation system 70, in accordance with an embodiment of the present invention. Instead of producing output to either a file 33 or computer terminal 32, the translation module can be extended to produce its output to an internal memory representation 71 from which the E/R schema may be output 72 to any one or more of a file 33, computer terminal 32, or specialized repository 13, either in memory 74 and/or to storage 73, that facilitates its use by client applications in the production of reports, analyzing data, or other such activities. Such repositories include such things as formats defined for existing modeling applications. Figure 7 shows enhancement of the export module 13.

The translation module 12 can be extended to include the specification of options in a separate input file that apply overall changes to the default translations of the translation module 12, or specify specific, non-default translations to be applied to specific constructs in the multi-dimensional model.

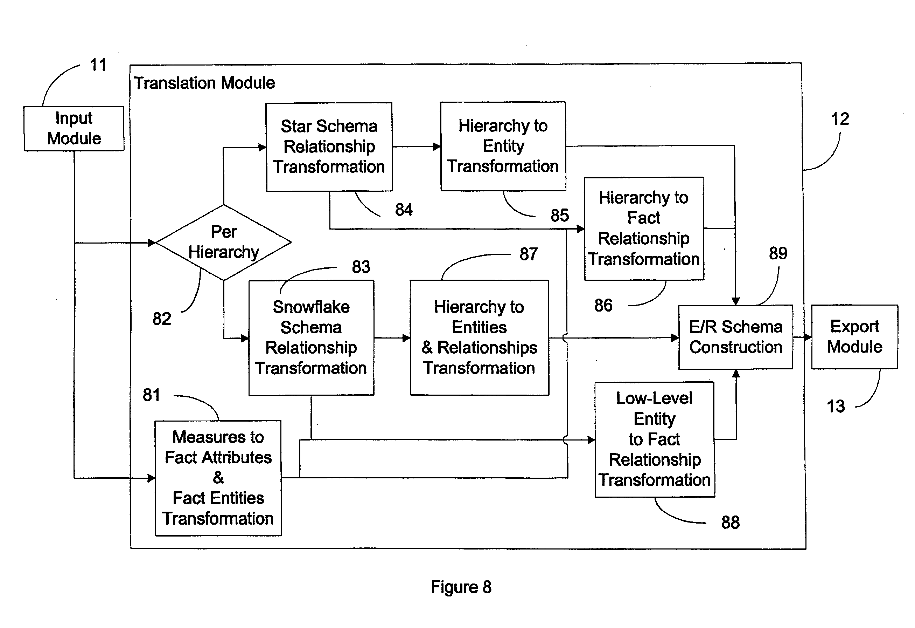

Figure 8 shows in a process flow diagram an example of a translation module 12, in accordance with an embodiment of the multi-dimensional model to E/R translation system 10, 30, 40, 50, 60, 70. For example, an E/R schema representing a star schema is produced by:
1. Producing a single entity in the E/R schema for each hierarchy (83) of each dimension (82).
2. Producing a single fact entity in the E/R schema (81).
3. Producing a single relationship between each hierarchical entity and the fact entity to represent a star schema in the E/R schema (87).

The following extensions to the translation module 12 can be made independent of each other:
1. Produce a snowflake schema by:
   a. Producing an entity in the E/R schema (84) for each level of a hierarchy of each dimension (82).
   b. Defining a relationship between entities representing consecutive levels of a hierarchy (86).
   c. Defining a relationship between the entity representing the lowest level of each hierarchy and the fact entity (88). Only one of the snowflake or star schema translations may be applied to a single hierarchy (82).
2. In a variation of the star schema, producing a single entity in the E/R schema for all hierarchies of a dimension (85).
3. Producing multiple fact entities in the E/R schema based on the "scope" of the multi-dimensional measures (81).

Prior to the description of the method and its implementation, a short description of business modelling application constructs and concepts is provided.
- **Namespace**
   A namespace defines a scope in which items have unique names. Names do not have to be unique across namespaces.
- Query Subject
   This is equivalent to an entity in the E/R data model, and a table or view in the relational model.
- Query Item
   This is equivalent to an attribute in the E/R data model, and column in the relational model.
   A query item may be characterized as follows (e.g., a "usage" property in a business modelling application):
   o **Identifier**
      Form the basis of relationships in the E/R data model and are typically involved in primary/foreign key definitions in relational databases.
   o **Attribute**
      Represent additional descriptive information associated with a unique value of an identifier query item.
   o **Fact**
      A measurable item of interest for reporting and/or analysis. A fact may have a defined aggregation (and semi-aggregation) rule. In the case of an OLAP data source, the aggregation type is obtained from the data source.
- **Relationship**
   This is equivalent to an attribute in the E/R data model and a join specification in the relational model, typically specified by primary/foreign key definitions.
- **Dimension**
   A set of nested groups. The groups are referred to as levels.
- **Hierarchy**
   A description of how the levels in a dimension are ordered.
- **Level**
   A group of query items that must contain a key query item, so that each member within the group is unique. Levels may contain other non-key query items, referred to as attributes. Levels are parts of dimensions.
- **Conformed Dimensions**
   Individual data sources may share dimensions that are defined with structures and members that are either identical or can be mapped from one to the other. Such dimensions are called conformed dimensions and can form the basis for authoring dimensional queries across multiple data sources.

In addition to the business modelling application concepts above, the following OLAP constructs are described prior to describing the mapping of OLAP metadata to a business modelling application model.
- **Cube**
   A cube is used to represent a collection of dimensions and measures, and the values of those measure at various intersections of the members from the diiferent dimensions.
- **Dimension**
   A collection of members with similar characteristics. A dimension may, or may not, have a defined hierarchical structure between its members.
- **Dimension Group**
   A logical grouping of one or more dimensions.
- **Measure**
   A measure represents a measurable item of interest. Typically, all measures are collected into a single dimension, in which case a measure is a member of this dimension, but with additional properties e.g. aggregation rules.
- **Hierarchy**
   A hierarchy defines an order of levels, as well as the relationships (ancestor/descendant) between the members at each level.
- **Level**
   A level represents a grouping of members within a dimension. A dimension may contain several levels - their definitions are not mutually exclusive.
- **Member**
   An individual value or instance within a dimension. For example, in a Geography dimension, possible members would be "Toronto", or "USA".
- **Property**
   An item associated with each member in a dimension, or each member in a level within a particular dimension.

The multi-dimensional model to E/R translation system 10, 30, 40, 50, 60, 70, in a business modelling application allows a user to import metadata from one or more OLAP data sources (for example, to one or more instances of OLAP cubes). This import process automatically maps a chosen subset of an OLAP cube into the business modelling application model without any user intervention and can, without any modification, be used as the basis for authoring tabular and cross tab reports in an end user tool without the user's knowledge that the data is stored in an OLAP data source and retrieved using OLAP query syntax.

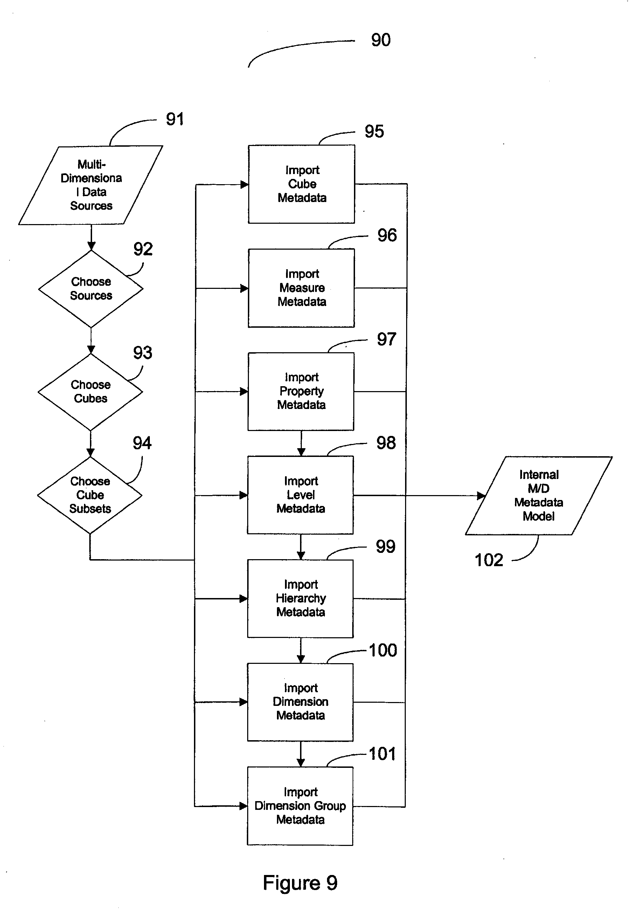

Figure 9 shows a flowchart of an example of an import process, in accordance with an embodiment of the invention. The process is as follows:
1. Connections are defined to one or more multi-dimensional data sources (91).
2. A user selects the data sources to be included in the entity-relationship schema to be created from those for which connections have been defined (92).
3. For each data source that does not represent a single multi-dimensional object (i.e., a cube or its equivalent), choose one or more cubes from the data source for inclusion in the E/R schema (93).
4. For each cube, choose a subset of the cube to be included in the E/R schema (94) (the default is for the entire cube to be included in the E/R schema). The portions of a cube that may be individually selected include
   a. Cube (95).
   b. Dimension group (101).
   c. Dimension (100).
   d. Hierarchy (99).
   e. Level (98).
   f. Property (97).
   g. Measure dimension.
   h. Measure (96).
5. For each cube for which at least a portion of its metadata has been selected for inclusion in the E/R schema (95), import the name of the data source, the cube, and any qualifiers to identify the cube on the data source (e.g., catalog, schema).
6. For each measure selected (96), import:
   a. Aggregator.
   b. Semi-aggregator (if applicable).
   c. Data type.
   d. If the measure dimension is hierarchized, import:
      i. The unique name of the hierarchy.
      ii. The unique name of the level at which the measure appears.
7. For each property selected (97), import:
   a. The unique name of the dimension group with which the property is associated, if applicable.
   b. The unique name of the dimension with which the property is associated.
   c. Dimension semantics (e.g., time, regular).
   d. The unique name of the hierarchy with which the property is associated.
   e. The unique name of the level with which the property is associated.
   f. The ordinal number of the level with which the property is associated.
   g. The unique name of the property.
   h. The data type of the property.
8. For each level selected (98), import:
   a. The unique name of the dimension group with which the level is associated, if applicable.
   b. The unique name of the dimension with which the level is associated.
   c. Dimension semantics (e.g., time, regular).
   d. The unique name of the hierarchy with which the level is associated.
   e. The unique name of the level.
   f. The ordinal number of the level.
9. For each hierarchy selected (99), import:
   a. The unique name of the dimension group with which the hierarchy is associated, if applicable.
   b. The unique name of the dimension with which the hierarchy is associated.
   c. Dimension semantics (e.g., time, regular).
   d. The unique name of the hierarchy.
10. For each dimension selected (100), import:
   a. The unique name of the dimension group with which the dimension is selected, if applicable.
   b. The unique name of the dimension.
   c. Dimension semantics (e.g., time, regular).

The above information, once imported, forms the basis for the translations of a multi-dimensional model into an E/R schema (102).

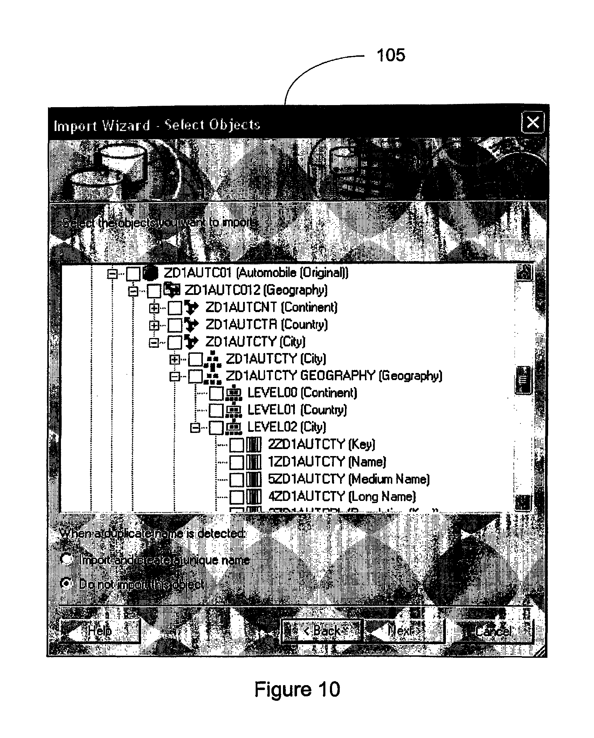

Figure 10 shows an example of an Import Selection Dialog 105 of a business modelling application. In Figure 10, a user is given the opportunity to select which portions of an OLAP cube they want to import (94) into a business modelling application model.
- Cube (95).
   A user can choose to import all of the metadata associated with an entire cube. In Figure 10, *ZD1AUTC01 (Automobile Original)* represents a cube.
- **Dimension Group (101).**
   A user can choose to import one of more of the dimension groups within a cube. In Figure 10, *ZD1AUTC012 (Geography)* represents a dimension group.
- **Dimension (100).**
   A user can choose to import one of more of the dimensions within a dimension group. In Figure 10, *ZDIAUTCNT (Continent), ZD1AUTCTR (Country)* and *ZD1AUTCTY (City)* all represent dimensions.
- **Hierarchy (99).**
   A user can choose to import one or more of the hierarchies within a dimension. In Figure 10, *ZD1AUTCTY GEOGRAPHY (Geography)* represents a hierarchy.
- **Level (98).**
   A user can choose to import one or more of the levels within a hierarchy. In Figure 10, *LEVEL00 (Continent), LEVEL01 (Country),* and *LEVEL02 (Ciry)* represent levels.
- **Property (97).**
   A user can choose to import one or more of the properties within a level. In Figure 10, *2ZD1AUTCTY (Key), 1ZD1AUTCTY (Name). 5ZD IA UTCTY (Mediuni Name),* and *4ZD1AUTCTY (Long Name)* represent properties.

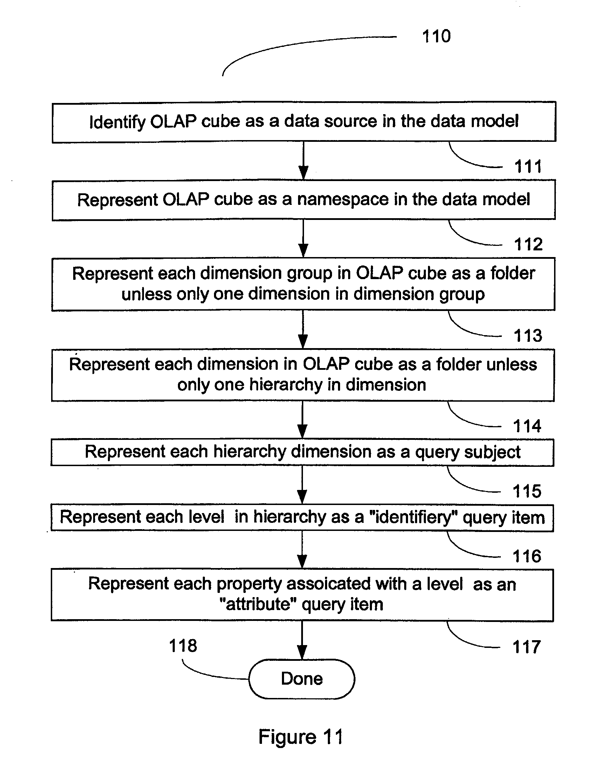

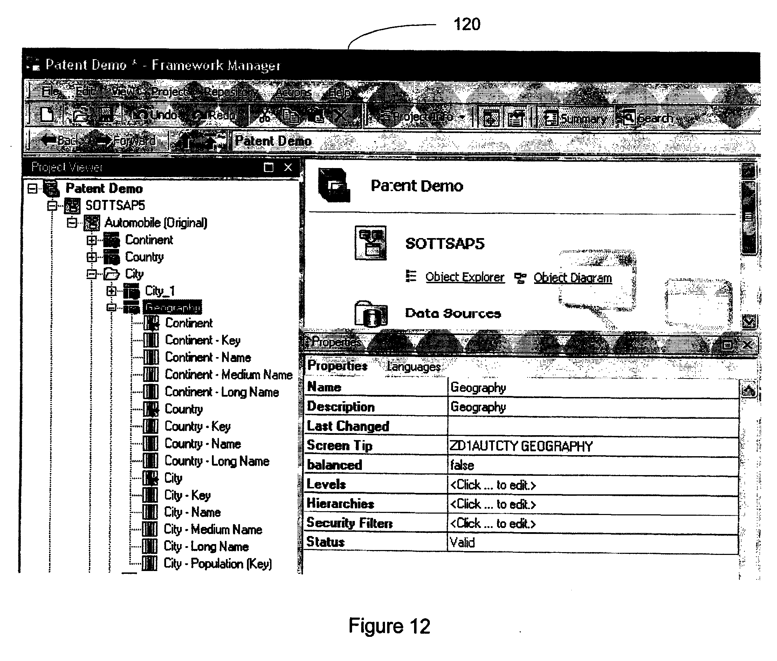

Figure 11 shows in a flowchart a method of importing cube information (110), in accordance with an embodiment of import module 11. The business modelling application OLAP import performs the following translations:
- Each OLAP cube is identified as a data source in the model (111).
- Each OLAP cube is also represented as namespace within the model (112). All objects of the cube that are represented in the model are defined within the cube's namespace.
- Each dimension group within a cube is represented as a folder, except if the dimension group only contains a single dimension (113).
- Each dimension within a cube is represented as a folder, unless the dimension has only a single hierarchy (114). An example of the representation of a dimension in a business modelling application is depicted in the screen shot 120 shown in Figure 12.
- Each hierarchy within a dimension is represented in the model as a query subject (115). In the case of multiple hierarchies within a single dimension, the first hierarchy is the default hierarchy as defined by the OLAP data source.
- Each level in a hierarchy is represented in the model as an "identifier" query item (116). The query items are presented in the root-to-leaf order in which the levels appear in the hierarchy.
- Each property associated with a level is represented as an "attribute" query item (117). The name of a property-based query item is "<Level Name> - <Property Name>" e.g., "City - Mayor".
These representations are depicted in Figure 12.

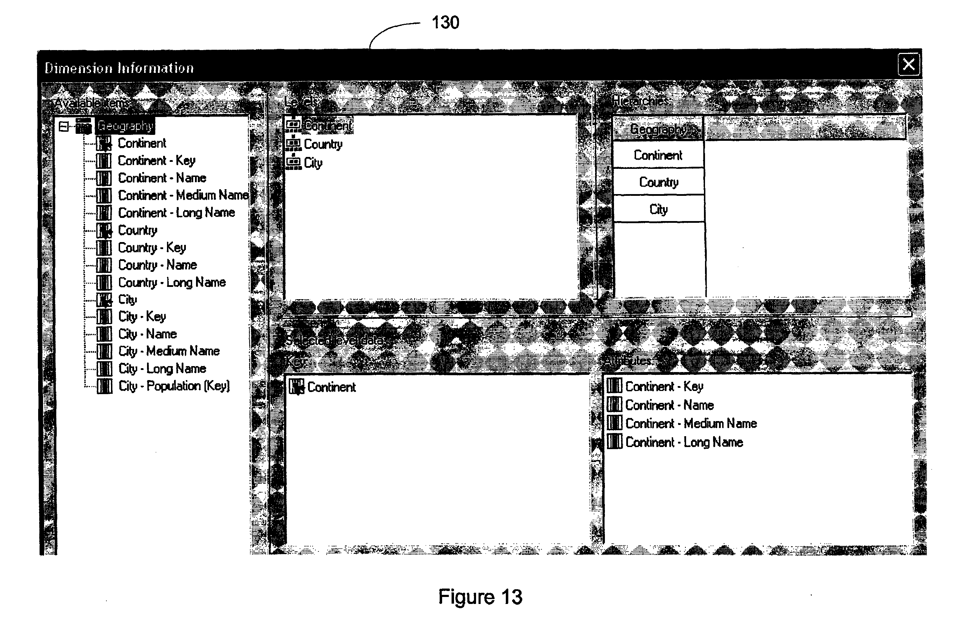

Figure 13 shows an example of a Hierarchy, Level, and Attribute Metadata dialog 130 iu a business modelling application. If a "Cognos" star representation 141 is chosen during import, each level's properties are collected in a single folder that immediately follows the level query item. If a "Kimball" star representation 142 is chosen during import, each level's properties immediately for the level query item.

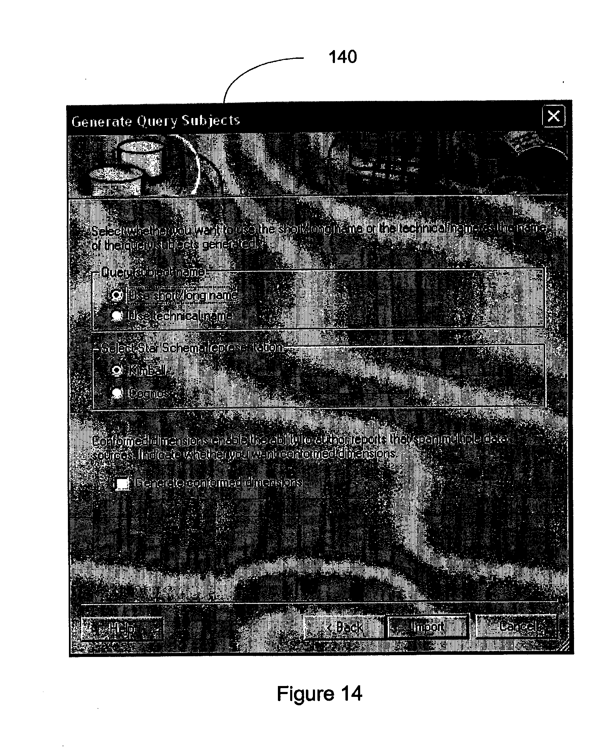

The ability to choose between the Cognos and Kimball representations is made during the import of metadata, as depicted in Figure 14. Figure 14 shows an example of an OLAP Import Options dialog 140 in a business modelling application. The structure of the hierarchy as it exists in the OLAP data source is contained within the model, including the name, key, and attributes of each level in a hierarchy. This is depicted in Figure 14.

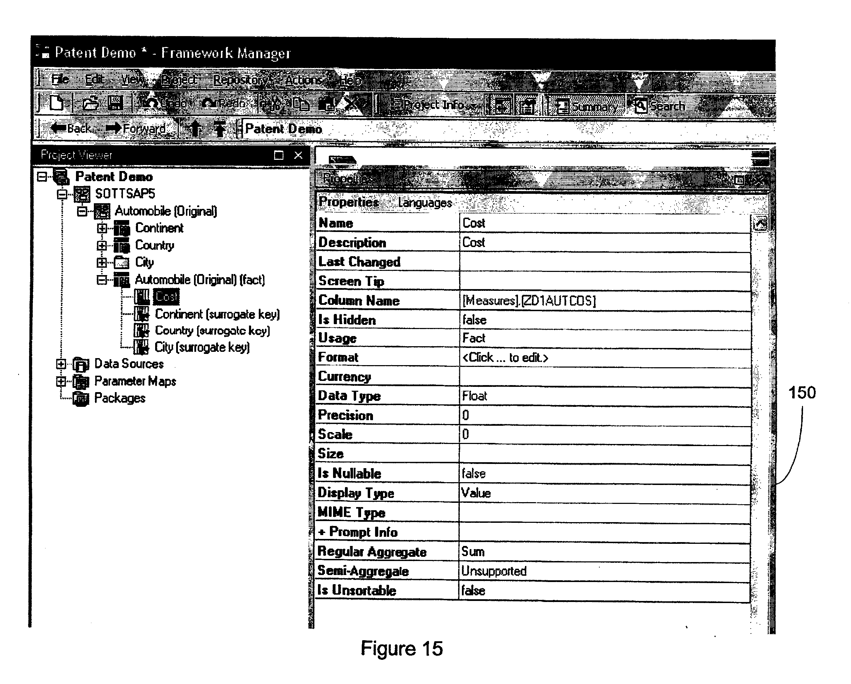

Figure 15 shows an example of a Fact Table dialog 150 in a business modelling application. The members of the measures dimension appear as "fact" query items in a separate "fact" query subject. For each dimension in the same namespace, a pseudo surrogate "identifier" query item in the fact query subject. This is depicted in Figure 15.

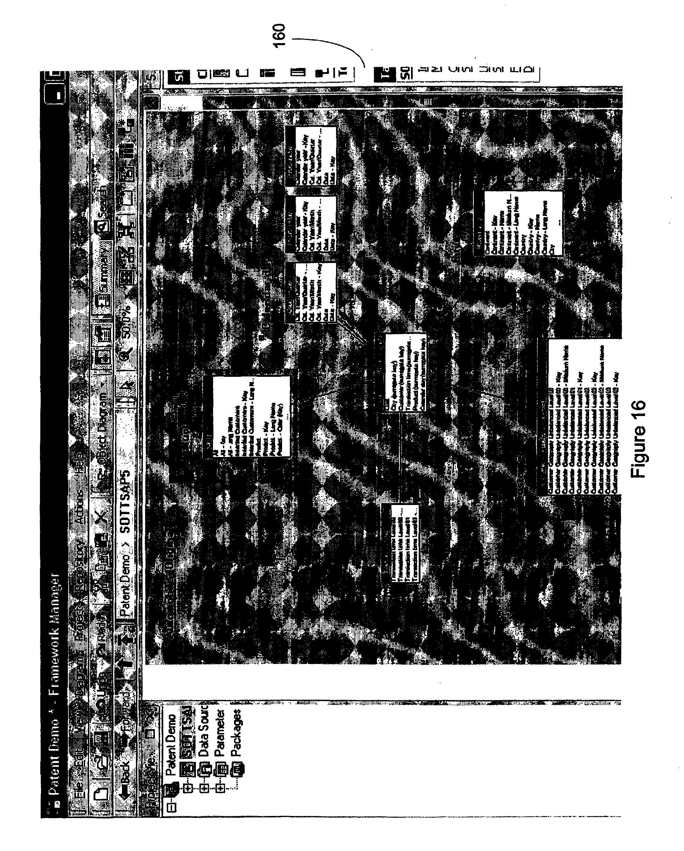

The net result of these translations is a star schema representation of an OLAP data source suitable for use as the basis for business (tabular) reporting, as depicted in the screenshot shown in Figure 16. Figure 16 shows a screen shot of an example of a star schema representation of an OLAP Cube in a business modelling application.

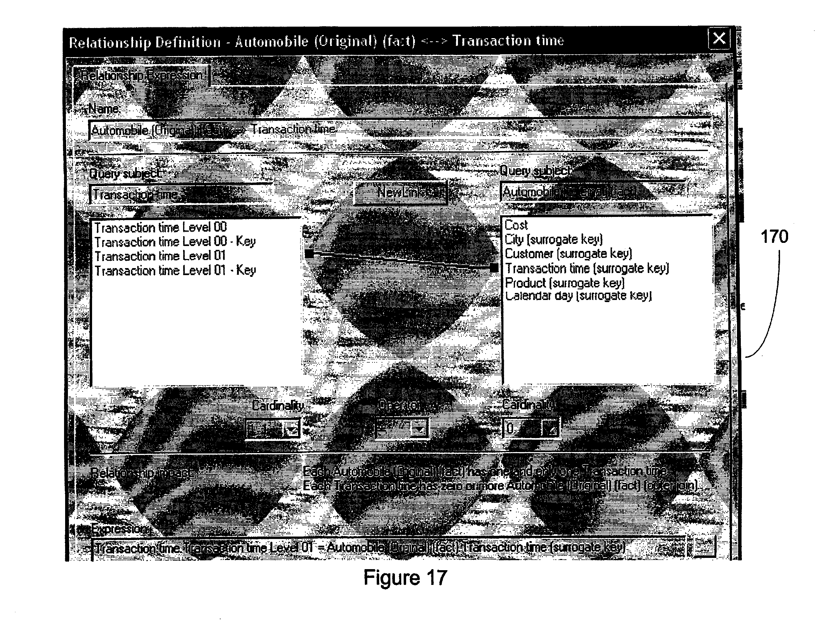

A 0 to N (outer join) relationship is defined between the lowest level query item "identifier" in each non-fact query subject to the pseudo surrogate query item in the fact table that corresponds to the non-fact query subject's dimension. This is depicted in Figure 17. Figure 17 shows an example of a Dimension to Fact Join Relationship dialog in a business modelling application.

If multiple OLAP cubes are imported into a single model and the "conform dimensions" option is chosen, then query subjects that are identified as being conformed (the process of which is described below) are represented in the model as follows:
- If two or more query subjects are conformed, then the first query subject imported into the model remains as it is and all of the other conformed query subjects are replaced with short cuts to the one query subject. The query subject is augmented with a list of the data sources in which it occurs.

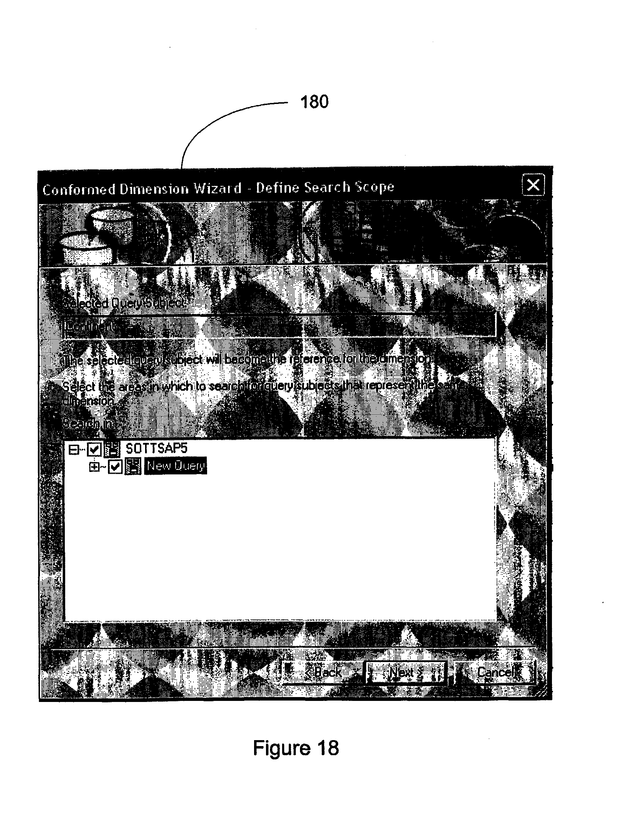

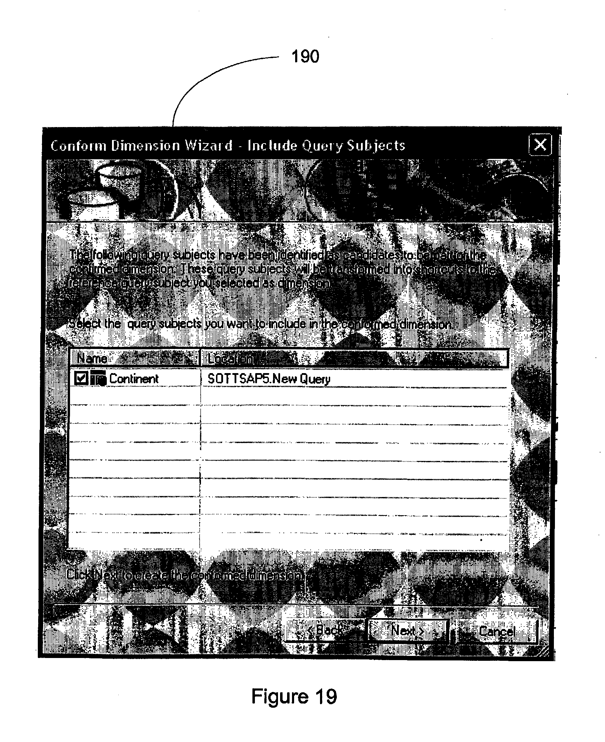

Figures 18 and 19 show examples of a first and second step in a Conformed Dialog Wizard. For example, a business modelling application may recognize two query subjects as being conformed only if all of the following conditions hold true:
- The physical name of the associated dimension and hierarchy are the same.
- The number of query items in the query subjects is the same.
- The order and physical name of the query items in the query subjects is the same.
- The number of levels in the hierarchies of the query subjects is the same.
- The order and physical name of the levels in the query subjects is the same.
- The number of attributes associated with each level is the same in the query subjects.
- The physical names of the attributes associated with each level are the same in each of the query subjects.

Advantageously, an embodiment of the present invention provides a method of automating the creation of an entity-relationship (E/R) schema adorned with optional dimensional (star/snowflake schema) metadata from a multi-dimensional data source, regardless of the manner in which:
a. The multi-dimensional data is stored.
b. The means by which the multi-dimensional metadata is obtained.
c. The means by which multi-dimensional data queries are posed.
d. The means by which multi-dimensional data is retrieved.
Optional, this schema may be augmentation with sufficient metadata to map the model entities to their underlying data source elements. Moreover, an E/R schema is created from one or more singular multi-dimensional data sources, typically referred to as cubes, but nor restricted to data stored in OLAP cubes, including the ability to recognize and model dimensions identical in two or more cube data sources.

Another embodiment of the present invention provides a process of automatically translating the multi-dimensional model (OLAP) metadata into an E/R schema. The process is as follows:
a. Represent each dimension in the multi-dimensional data source as one or more entities in the E/R schema. Hierarchies may either be combined into a single logical construct, or each hierarchy represented by its individual logical construct. Preferably, for clarity of the model, a single entity per hierarchy may be set as the default.
   Each logical construct is represented in the E/R schema using either a star schema representation or a snowflake representation as follows:
   If the logical construct was dimension, then the name of the entiry is the same as the dimension, otherwise the name of the entity is dimension/hierarchy as obtained from the multi-dimensional data source.
   A default representation is (star) chosen, but may be overridden for individual dimensions or hierarchies:
   i. Star Schema
      1. Create a single entity in the model for each logical construct, its name derived from the multi-dimensional data source.
      2. For each level within each logical construct, create an attribute within its corresponding entity in the E/R schema. The name of the attribute is the same as the name of the level in the multi-dimensional data source.
      3. Create only a single attribute within an entity when the same level appears two or more times in the logical construct.
      4. Create an attribute within the corresponding entity in the E/R schema for each dimension, hierarchy, or level-specific property. If identical level-specific properties exist for two or more levels in a single hierarchy, create only a single such property. If identical properties exist for two or more hierarchies, create only a single such attribute. The E/R schema attribute has the same name as the property in the multi-dimensional data source.
   ii. Snowflake Schema
      1. For the root level within a logical construct, create an entity in the E/R schema with an attribute for the level identifier and an attribute for each level-specific property, as well as for each hierarchy or dimension applicable property. The name of each attribute in the E/R schema is obtained from the name of the corresponding object in the metadata model.
      2. For each subsequent level within a logical construct, create an entity in the E/R schema with a single attribute for the level identifier, as well as an attribute for each level-specific property, as well as for each hierarchy or dimension applicable property.
      3. For each subsequent level, add a single attribute to the entity level with the same name as the level identifier of the parent level.
      4. If a hierarchy is a network i.e. a child may have multiple parents, then the relationship between the parent and child entities of a logical entity in the E/R schema is 1..N ←→ 1..N, otherwise the relationship is 1..N → 1..N.
      5. The name of each level-specific entity in the E/R schema is named dimension/hierarchy/level.
b. Represent the collection of measures/facts in the multi-dimensional data source as one or more entities in the E/R schema with the names "Fact", "Fact 2", etc.
c. Each measure of a multi-dimensional data source has either an explicit or implied scope. The implicit scope in the absence of other information is that a fact is measured relative to all dimensions/hierarchies and to the lowest level of each hierarchy. An explicit measure scope indicates that a measure is measured over a subset of the dimensions/hierarchies in a data source and may be measured to an arbitrary, non-leaf level of one or more of the hierarchies for which it is measured. The scope of each measure is used as follows to construct one or more "fact" entities in the E/R schema:
   i. All facts that have only an implied scope, or whose explicit scope references all dimensions in the E/R schema (all hierarchies in a single logical entity), or all hierarchies in the E/R schema (each hierarchy is a logical entity) appear in the entity called "Fact".
   ii. A fact that has an explicit scope that is a subset of the full set of dimensions (all hierarchies in a logical entity) or a subset of the full set of hierarchies (each hierarchy is a logical entity) is placed in a separate fact entity. If a fact has the same explicit scope in relation to the E/R schema, the two facts occur within the same fact entity.
d. To an entity that represents the fact table, add an attribute equivalent to the attribute that represents the lowest applicable for each hierarchy in which the measure is in scope. If an attribute is applicable to two or more hierarchies from the same dimension, only add the attribute once to the fact entity.
e. A relationship is defined between each dimensional entity for each hierarchy contained within it and the fact table in terms of the attribute that represents the lowest applicable level of a hierarchy and its corresponding attribute created in step d.
f. Measures may also have one or more hierarchies defined. The default scope of a measure implies that each dimensional entity is relevant to the leaf level of each measure in each of its hierarchies. A measure may also define the scope of a dimensional entity to a level within one or more of its hierarchies.
   i. The rules that apply to the construction of attribute within dimensional entities in regards to hierarchies are also applicable to measures. That is, facts may be a contained in a collection of fact entities, with possibly one entity for each hierarchy and one entity for each level. Each entity may be applicable to one or more facts.
   ii. Joins from dimensional entities to the fact entities are as defined above, except that the relationships can be between arbitrary levels of a dimensional entity and arbitrary levels in the measure/fact entities.
g. The relationships between dimensional entities and the fact table are either inner (1..n → 1..n) or outer (1..n **→** 0..n) by default, but may be modified individually.

The model defined the process above may be augmented with physical metadata that provides a mapping from the logical E/R schema to the physical multi-dimensional metadata. The method of mapping comprises the following steps:
a. Each multi-dimensional data source (cube) is represented in the model and contains the following physical metadata:
   i. Catalog name.
   ii. Schema name.
   iii. Cube name.
b. Each entity has associated with it the following physical metadata:
   i. Dimension name.
   ii. Hierarchy name(s).
   iii. Entity semantics ("regular" dimension, time dimension, fact).
c. Each attribute representing a level in a hierarchy has associated with it the following physical metadata:
   i. Name of the level in each hierarchy represented by the entity, unless the names are the same in all hierarchies, in which case only a single name is required.
   ii. Ordinal number of the level in each hierarchy represented by the entity, unless the ordinal values are the same in all hierarchies, in which case only a single ordinal number is required.
   iii. Level semantics.
d. Each attribute representing a property has associated with it the following metadata:
   i. The level attribute in the entity with which the property attribute is associated.
   ii. Property name.
   iii. Data type.
e. Each attribute representing a fact/measure has associated with it the following physical metadata:
   i. Measure name.
   ii. Aggregator.
   iii, Semi-aggregator.
   iv. Data type.

Optionally, the E/R schema is then adorned with additional metadata for the purposes of facilitating the translation of tabular queries posed against the model into multi-dimensional queries. The method for this comprises the following steps:
a. Each entity has associated with it the following additional metadata:
   i. Balanced/Unbalanced.
   ii. Ragged/Unragged.
   iii. Single/Multi root.
b. Each attribute representing a fact/measure has associated with it the following additional metadata:
   i. Original aggregate rule.
   ii. Original semi-aggregate rule.

### Example: SAP BW

In the following example, a reference to the business modeling application is a reference to an implementation of the multi-dimensional model to E/R translation system 10.

In one embodiment of the present invention, an implementation of the technology is designed to build an E/R schema for SAP BW (TM) (currently version 3.0B). Access is provided to all of the data sources accessible via the SAP OLAP Business Application Programming Interface (BAPI), including:
- InfoCube
- InfoQuery
- Operational Data Store (ODS) via InfoQuery
   The ODS represents a staging area for transactional data prior to the construction of InfoCubes.
- InfoSet via InfoQuery
- Remote Cube
- MultiProvider

The SAP BW multi-dimensional model exposed through SAP's OLAP BAPI is similar to the model defined as part of an OLE DB for OLAP specification. OLE is an intra and inter process communication mechanism. OLE DB is an application programming interface (API) built upon the OLE protocol for accessing tabular and relational databases. OLE DB for OLAP is an extension of the OLE DB interface for accessing multi-dimensional (mostly OLAP) data sources.

In addition to the translations to the SAP BW multi-dimensional model made by the OLAP BAPI layer, additional automated procedures are required to develop a complete E/R schema of an SAP BW data source, as detailed below. The multi-dimensional model to E/R translation system 10 (or business modeling application) provides these additional automated procedures.

Some issues are general to any OLAP data source and include:

### Single vs. multi root

When generating data queries against an OLAP data source, it is important in some instances to know whether the root (highest) level of a hierarchy contains either one, or more than one, member.

The business modeling application invokes the *GetMembers* method of the OLAP BAPI to obtain the list of members at the root level of all hierarchies represented in an E/R schema to determine the value (true/false) of a property that is associated with the associated entity that indicates whether the hierarchy has a single root member or not.

### Balanced & Ragged

Hierarchies may either be balanced or unbalanced. In a *balanced hierarchy,* all branches descend to the same level. In an *unbalanced hierarchy,* the only difference is that at least one branch of the hierarchy descends to a different level than all the others. That is, at least one member at the same level within a hierarchy has no descendants while its siblings do.

In a *ragged hierarchy,* at least one member can have children at levels other than the one immediately below itself in the hierarchical structure.

During the generation of data queries for SAP BW, the balanced and ragged features of a hierarchy become important for level-based queries and especially in the presence of filters applied to the members at one or more levels since unbalanced and ragged hierarchies introduce members that must be accounted for with additional query logic that simply is not required for balanced (and non-ragged) hierarchies.

The business modeling application identifier each default hierarchy as balanced, but identifies all others as unbalanced. The modeler is free to change this property as they see fit. A modeling application can also traverse the members of an entire hierarchy and determine whether or not a hierarchy is balanced. If each leaf member appears at the same level, then it is balanced, otherwise the first contradiction indicates a non-balanced hierarchy. Any patent/child relationship that spans more than a single level indicates that a hierarchy is ragged.

The translations to the E/R schema specific to SAP BW include:

### Hierarchies

A SAP BW characteristic (exposed through the OLAP BAPI as a dimension) contains at least a single, default hierarchy that contains an "ALL" member at level 0 and all the characteristic values (members) at level 1 with the "ALL" member as their parent. If the default hierarchy is included in the E/R schema, the corresponding entity is identified by a custom business modeling application property as being the default hierarchy as this information is useful when devising queries based upon the E/R schema.

SAP BW uses constructs called presentation hierarchies (defined in the Administrator Workbench) to define hierarchical organizations of characteristic values that in addition define the manner in which key figures (usually referred to in OLAP terminology as facts or measures) are aggregated.

Presentation hierarchies can be versioned in one of three manners, all of which are supported to different extents in the business modeling application, as described below.

### Versioned

A single presentation hierarchy may have different versions. The OLAP BAPI presents these as separate hierarchies and are represented as individual query subjects.

### Time dependent structure

Some presentation hierarchies have a level structure that is time dependent. The date that determines which structure to use within a particular query may be fixed for a particular hierarchy, or may be the date assigned to the query, or simply the current date on which a query is executed.

When generating an E/R schema, however, this time dependency must be accounted for since the corresponding entity has a different structure depending upon its effective presentation date. The business modeling application reads the RSHIEDIR table on the SAP BW server to determine the effective date ranges for all hierarchies. The RSHEDIR table represents a catalog of all available presentation hierarchies on an SAP BW server and includes such information as the SAP BW object for which a hierarchy is applicable and its valid from/to dates, if defined.

If a hierarchy has more than a single date range, the business modeling application:
■ Creates a separate entity for each time dependent version of the hierarchy with the format:
   <hierarchy name> <effective from date> - <effective to date>
   e.g.,
   Customer 1999-09-21-...
   Where "..." indicates either an open ended from or to date.
■ Sets what is called the "key date" to a date within each individual range, then retrieves the level information for the hierarchy and populates the corresponding entity in the E/R schema.

### Time dependent members

It is also possible within SAP BW to define presentation hierarchies in which the members within the hierarchy, and their position within the hierarchy, can change over time. One consequence of this ''movement'' of members is that the levels within a hierarchy may change over time.

The business modeling application works on the assumption those members, and their positions within such a hierarchy, may change over time, but that the structure of the hierarchy i.e. the number and order of its levels, does not change over time. Hence, the structure of the hierarchy effective when the E/R schema is created is assumed to be valid for all dates.

### Properties

Attributes in SAP BW are applicable to all characteristic values of a characteristic and hence are applicable only to the leaf members of all hierarchies within a dimension (the leaf nodes of all hierarchies must the characteristic values), or in the case of a recursive presentation hierarchy, to all nodes in the hierarchy.

In a presentation hierarchy in which one or more levels are based on different characteristics, only those of the "default" properties of the external characteristic that are the same as those of the base characteristic are accessible in data queries. Consequently, the business modeling application determines which of an external characteristic's properties are the same as those of the base characteristic and adds these to the entity that represents the hierarchy as attributes associated with the level in question.

The "default" properties in SAP BW are:
o Key
o Name
o Short name
o Medium name
o Long name
All other non-default properties of an external characteristic are only accessible within the hierarchies of the characteristics themselves.

### Multiple languages

SAP BW supports the installation of one or more languages on an individual server. Characteristic values may be defined as language dependent and have defined values defined for one or more of the server's installed languages. When a user logs onto a BW server, they can specify a language identifier. This in turn dertermines which language dependent text is used for characteristic values, amongst other things. In the case that there is no text for a particular language, the text of the default server language is used.

When creating an E/R schema from an SAP BW data source, the business modeling application determines the languages installed on associated server and connects to the server once for each language and adds the language-specific text for all objects to the E/R schema:
o Folder (dimension group)
o Folder (dimension)
o Entity (hierarchy)
o Attribute (level or attribute/property)
o Attribute (key figure)
o Data source (InfoCube, InfoQuery, etc.)

### Time hierarchies

The identification of time dimensions (currently by name, but possibly in the future based on SAP BW metadata) and their associated hierarchies allows the business modeling application to provide more meaningful names to the levels of these hierarchies, such as "Year" or "Month" as opposed to the default SAP BW hierarchy names exposed through the OLAP BAPI, such as "LEVEL00" and "LEVEL02".

In addition, in the case of characteristics derived from the 0DATE characteristic, the leaf level members can be identified as being of type date as opposed to string/text, thus allowing use of date/calendar controls for value input/selection and date formatting for display purposes.

### Manipulation of the member unique name

Each level of a hierarchy is represented in the E/R schema by an attribute in the associated hierarchy entity. The values of this attribute, by default, would be the member unique name (MUN) as returned by the OLAP BAPI. However, the MUN is a contrived value that is constructed within the OLAP BAPI and holds little, to no, significance to end users.

Instead of presenting the entire MUN value to end users, it is possible for a reporting application to extract the ''key'' portion of the MUN and display it to the end user. MUNs are composed of two portions:
■ Part #1
   Dimension, followed by optional hierarchy name.
■ Part #2
   Key value, followed by optional (external) dimension name.

The key value can be extracted and displayed to the end user. However, if a user should use this value in turn as a filter upon data, it is necessary for the reporting tool to be able to convert this "key" portion back into a complete MUN.

The algorithm for converting a "key" into a complete MUN requires additional metadata that the business modeling tool extracts while constructing the E/R schema. For each hierarchy, the following information is extracted and stored in the E/R schema:

### The type of hierarchy

### ■ Default

Described above, this hierarchy contains a single "ALL" member at level 0 and all characteristic values at level 1.

The OLAP BAPI explicitly identifies this type of hierarchy as the default.

### ■ Recursive

In this type of hierarchy, all nodes in the entire hierarchy are characteristic values from the base characteristic.

The business modeling application identifies a recursive hierarchy by examining the MUN of a member from each level of the hierarchy. If the dimension name of part #2 of the MUN for the non-leaf members is the same as the base characteristic's name, this represents a recursive hierarchy.

### • Text

All non-leaf nodes are text/string values.

The business modeling application identifies a hierarchy with text nodes by examining the MUN of a member from each level of the hierarchy. If the dimension name of part #2 of the MUN for the non-leaf members is 0HIER_NODE, this represents a recursive hierarchy.

### • Characteristic

The nodes at each level within the hierarchy are derived from a different (external characteristic than the one used to populate the leaf level of the hierarchy.

The business modeling application identifies a hierarchy with external characteristic values as nodes by examining the MUN of a member from each level of the hierarchy. If the dimension name of part #2 of the MUN for the non-leaf members is empty, does not indicate the use of text nodes (as indicated by the phrase OHIER_NODE), and not the same as the base characteristic, this represents a recursive hierarchy.

### ■ Time

The time-based dimensions are explicitly identified by the OLAP BAPI and behave much like characteristic hierarchies, except in the manner in which the special "not assigned" node's MUN is constructed. This requires business modeling application to use prior knowledge of the SAP BW naming convention to determine the number of zeros that must be used as the key value of part #2 of a MUN that identifies a "not assigned" value for the characteristic.

For characteristic hierarchies, the identification of the characteristic used to populate the nodes at each level in the hierarchy.

The multi-dimensional model to E/R translation system 10, 30, 40, 50, 60, 70 according to the present invention, and the methods described above, may be implemented by any hardware, software or a combination of hardware and software having the above described functions. The software code, either in its entirety or a part thereof, may be stored in a computer readable memory. Further, a computer data signal representing the software code that may be embedded in a carrier wave may be transmitted via a communication network. Such a computer readable memory and a computer data signal are also within the scope of the present invention, as well as the hardware, software and the combination thereof.

While particular embodiments of the present invention have been shown and described, changes and modifications may be made to such embodiments without departing from the true scope of the invention.

## Claims

1. An entity-relationship modelling system for modelling a multi-dimensional data source in an entity-relationship model, the entity-relationship system comprising:
an import module for performing translations on multi-dimensional data;
a translation module for translating multi-dimensional data into an entity-relationship schema; and
a repository for storing the entity-relationship schema.

2. A multi-dimensional model to entity-relationship schema translation system, the system comprising:
an input file comprising a description of a multi-dimensional data:
a translation model for translating the multi-dimensional data into an entiry-relationship schema;
an output file comprising the entity-relationship schema; and
a computer terminal for storing the entity-relationship schema.

3. The multi-dimension al model to entity-relationship schema translation system as claimed in claim 2, further comprising:
a multi-dimensional data source for storing the multi-dimensional data; and
an extract module for retrieving multi-dimensional data from the multi-dimensional data source and producing the input file.

4. The multi-dimension al model to entity-relationship schema translation system as claimed in claim 3, further comprising an in-memory model for inputting the input file.

5. The multi-dimension al model to entity-relationship schema translation system as claimed in claim 2, further comprising:
a repository for storing the output file; and
an in-memory schema for outputting the output file to the repository.

6. A method of creating an entity-relationship schema from a multi-dimensional data source, the method comprising the steps of:
selecting multi-dimensional data;
performing translations on the multi-dimensional data; and
generating an internal entity-relationship schema based upon the translations.

7. A method of translating multi-dimension data into an entity-relationship schema, the method comprising the steps of:
producing a single entity in an entity-relationship schema for each hierarchy of each dimension in a multi-dimensional model;
producing a single fact entity in the entity-relationship schema; and
producing a single relationship between each hierarchical entity and the fact entity to represent a star schema in the entity-relationship schema.

8. The method as claimed in claim 7, further comprising the steps of:
producing an entity in the entity-relationship schema for each level of a hierarch of each dimension;
defining a relationship between entities representing consecutive levels of a hierarchy; and
defining a relationship between the entity representing the lowest level of each hierarchy and the fact entity.

9. The method as claimed in claim 7, further comprising the step of producing a single entity in the entity-relationship schema for all hierarchies of a dimension.

10. The method as claimed in claim 7, further comprising the step of producing multiple fact entities in the entity-relationship schema based on a scope of multi-dimensional measures.

11. A method of importing multi-dimensional metadata, the method comprising the steps of:
defining connections to one or more multi-dimensional data sources;
selecting a data source to be included in an entity-relationship schema;
choosing one or more cubes from each data source that does not represent a single multi-dimensional object;
choosing a subset of each cube;
for each cube where at least a portion of its metadata has been selected, importing:
a name of the data source;
a name of the cube; and
qualifiers to identify the cube on the data source;
for each measure selected, importing:
an aggregator;
a data type; and
a unique name of a measure dimension;
for each property selected, importing:
a unique name of a dimension associated with the property;
dimension semantics;
a unique name of a hierarchy associated with the property;
an ordinal number of a level associated with the property;
a unique name of the property; and
a data type of the property;
for each level selected, importing:
a unique name of the dimension associated with the level;
dimension semantics;
a unique name of a hierarchy associated with the level;
a unique name of the level; and
an ordinal number of the level;
for each hierarchy selected, importing:
a unique name of the dimension associated with the hierarchy;
dimension semantics; and
a unique name of the hierarchy;
for each dimension selected, importing:
a unique name of the dimension; and
dimension semantics.

12. A computer data signal embodied in a carrier wave and representing sequences of instructions which, when executed by a processor, cause the processor to perform a method of creating an entity-relationship schema from a multi-dimensional data source, the method comprising the steps of:
selecting multi-dimensional data;
performing translations on the multi-dimensional data; and
generating an internal entity-relationship schema based upon the translations.

13. A computer-readable medium having computer readable code embodied therein for use in the execution in a computer of a method of creating an entity-relationship schema from a multi-dimensional data source, the method comprising the steps of:
selecting multi-dimensional data;
performing translations on the multi-dimensional data; and
generating an internal entity-relationship schema based upon the transitions.

14. A computer program product for use in the execution in a computer of an entity-relationship modelling system for modelling a multi-dimensional data source in an entity-relationship model, the computer program product comprising:
an import module for performing translations on multi-dimensional data;
a translation module for translating multi-dimensional data into an entity-relationship schema; and
a repository for storing the entity-relationship schema.
